# EUROPÄISCHE PATENTSCHRIFT

(11) **EP 1 283 582 B1**
(45) Veröffentlichungstag und Bekanntmachung des Hinweises auf die Patenterteilung: **19.01.2005**
(21) Anmeldenummer: 01119262.2
(22) Anmeldetag: 09.08.2001
(51) Int. Cl.: H02K 3/22

(54) **Anordnung innen gekühlter elektrischer Leiter, insbesondere für einen Generatorläufer**
Arrangement of inside cooled electric conductors, especially for a rotor of a generator
Dispositif de refroidissement interne de conducteurs, particulièrement pour rotor de générateur

(43) Veröffentlichungstag der Anmeldung: 12.02.2003
(73) Patentinhaber: SIEMENS AKTIENGESELLSCHAFT, 80333 München (DE)
(72) Erfinder: Klaar, Jürgen, 47506 Neukirchen-Vluyn (DE)

(56) Entgegenhaltungen:
- WO-A-96/05645
- US-A- 2 833 944
- US-A- 3 225 231
- US-A- 4 543 503

## Beschreibung

Die Erfindung betrifft eine Anordnung innen gekühlter elektrischer Leiter, die jeweils einen Längsleiter und einen Querleiter umfassen, insbesondere für eine Spule eines Generatorläufers. Unter einem innen gekühlten Leiter wird insbesondere ein direkt innen gekühlter Leiter im Gegensatz zu einem radial gekühlten Leiter verstanden.

Elektrische Leiter, die auf hohe Stromstärken ausgelegt sind, wie die Spulen eines Turbogenerators mit einer Leistung ab etwa 450 MVA, werden üblicherweise durch interne Kühlkanäle gekühlt. Im Querschnitt eines Leiters oder direkt neben dem Leiterquerschnitt verläuft größtenteils parallel zum Leiter mindestens ein Kühlkanal. Durch den oder jeden Kühlkanal wird ein Kühlfluid, insbesondere ein Kühlgas, vorzugsweise Wasserstoff, mit erheblicher Geschwindigkeit geleitet, wobei sich die strömungstechnische Gestaltung des Kühlkanals direkt auf die Strömungsgeschwindigkeit und die Kühlwirkung und damit auf die erreichbare Leistung des Generators auswirkt. Ein derartiger elektrischer Leiter mit Kühlkanal ist z.B. aus der DE 195 43 392 C1 bekannt. Der Strömungswiderstand im Einlassbereich des Kühlkanals ist dabei durch Spreizung des Leiters in diesem Bereich verringert.

Zum Strömungswiderstand in einem innen gekühlten Leiter trägt insbesondere eine Biegung oder - als Grenzfall einer Biegung - ein Knick des Kühlkanals bei, wobei die auf die Umlenkung des Kühlmittelstroms zurückzuführende Erhöhung des Strömungswiderstands umso größer ist, je kleiner der Biegeradius ist. Zu Berücksichtigen sind auch Eintritts- und Austrittsverlust in den bzw. aus dem jeweiligen Kühlkanal.

Die elektrischen Leiter eines Generatorläufers verlaufen im Wesentlichen parallel zu dessen Achse, wobei stirnseitig im Bereich des sogenannten Wickelkopfes an den axialen Leiterabschnitten tangential verlaufende Leiterabschnitte angeschlossen sind. Dieser Anschluss zwischen den im wesentlichen senkrecht zueinander stehenden Leiterabschnitten kann, wie aus der DE-AS 10 36 370 bekannt, durch eine Biegung des Leiters erfolgen, wobei der Kühlkanal durchgängig der Biegung folgt. Diese Leiter- und Kühlkanalführung vermeidet zwar einen Knick innerhalb des Leiters und Kühlkanals, ist jedoch aufgrund der Biegung des Leiters mit internem Kühlkanal fertigungstechnisch aufwendig.

In fertigungstechnisch vergleichsweise einfacher Weise kann ein tangential oder radial verlaufender Leiterabschnitt mit einem axial verlaufenden Leiterabschnitt stofflich, insbesondere durch Lötung, verbunden werden, wobei die einzelnen Leiterabschnitte jeweils gerade sind und zumindest annähernd einen rechten Winkel bilden. Durch die Lötung ist der Kühlkanal beziehungsweise sind die Kühlkanäle einer der verbundenen Leiterabschnitte verschlossen. Aus diesem Grund muss an der Verbindungsstelle senkrecht miteinander verbundener Leiterabschnitte jeweils ein gesonderter Gaseintritt oder Gasaustritt vorgesehen werden. Hierdurch werden - besonders bei Parallelschaltung des Kühlkanals des axialen Leiterabschnitts einerseits und des tangentialen Leiterabschnitts andererseits - mehrere Kühlkanäle erheblich voneinander abweichender Länge gebildet, in denen das Kühlfluid in entsprechend unterschiedlichem Maß erhitzt wird. Die unterschiedliche thermische Belastung einzelner Leiterabschnitte wirkt sich ungünstig auf die erreichbare Leistung des Generators aus.

Der Erfindung liegt daher die Aufgabe zugrunde, eine fertigungstechnisch günstige Anordnung innen gekühlter elektrischer Leiter, insbesondere für Spulen eines Generatorläufers, mit geeigneter Kühlmittelführung anzugeben.

Diese Aufgabe wird erfindungsgemäß gelöst durch die Merkmale des Anspruchs 1. Hierbei ist bei mehreren benachbart angeordneten Leitern, die jeweils einen Längsleiter und einen damit verbundenen Querleiter umfassen und deren Längsleiter bzw. Querleiter jeweils zumindest annähernd parallel zueinander verlaufen, ein Kühlkanal eines Längsleiters eines ersten Leiters mit einem Kühlkanal eines Querleiters eines benachbarten zweiten Leiters verbunden.

Die Erfindung geht dabei von der Überlegung aus, dass die Kühlmittelführung in einer Anordnung innen gekühlter elektrischer Leiter unabhängig von der Stromführung zu betrachten ist. Eine direkte Verbindung der Kühlkanäle zweier elektrisch miteinander verbundener Leiterabschnitte ist nicht notwendig. Umgekehrt können die Kühlkanäle elektrisch nicht miteinander verbundener Leiterabschnitte strömungstechnisch verbunden werden. Da bei der Gestaltung von Kühlkanälen die Erzielung eines geringen Strömungswiderstandes Priorität hat, sollten Umlenkungen möglichst weitgehend vermieden werden. Ferner sollten sich die einzelnen Kühlkanäle in ihrer Länge nicht zu stark unterscheiden, um eine ausreichend gleichmäßige Kühlung zu gewährleisten.

Innerhalb eines Leiters kann eine rechtwinklige Verbindung zwischen einem Querleiter und einem Längsleiter derart gebildet werden, dass die Stirnseite des Quer- oder Längsleiters mit der Wandung des anderen Leiterabschnitts durch Lötung verbunden ist. Die Querschnitte der beiden Leiterabschnitte können sich hierbei voneinander unterscheiden. Da zur Vermeidung einer Schwächung der jeweiligen Lötverbindung der Kühlkanal an der Stirnseite des Quer- oder Längsleiters nicht durch die Lötung hindurch gerade weitergeführt werden kann, ist das Kühlmittel an dieser Stelle mit geänderter Strömungsrichtung weiterzuleiten, z. B. über eine in der Wandung an der Längsseite dieses Leiterabschnitts vorzusehende Bohrung oder eine sogenannte Auskammerung. Bei der Weiterleitung des Kühlmittels sollte die Anzahl der Umlenkungen auf ein Minimum beschränkt sein.

Liegt in dem von einem Leiter gebildeten Winkel ein in gleicher Weise aus einem Quer- und einem Längsleiter gebildeter innerer Leiter, wobei die Quer- beziehungsweise Längsleiter der beiden Leiter in geringem Abstand zumindest annähernd parallel zueinander angeordnet sind, so liegt die Stirnseite des Quer- oder Längsleiters des inneren Leiters einer Wandung des Längs- beziehungsweise Querleiters des äußeren Leiters gegenüber. Somit kann zwischen dieser freien Stirnfläche des inneren Leiters und dem in dem gegenüberliegenden Abschnitt des äußeren Leiters verlaufenden Kühlkanal ein Verbindungskanal vorgesehen werden. Dieser Verbindungskanal ermöglicht in strömungsgünstiger Weise die Leitung von Kühlmittel von einem Abschnitt des inneren Leiters in einen quer dazu angeordneten Abschnitt des äußeren Leiters oder umgekehrt mit nur einer Umlenkung.

Die versetzt angeordneten Leiter unterscheiden sich in ihrer Länge. Hierbei sind bei einem äußeren Leiter in der Regel sowohl Längs- als auch Querleiter länger als bei einem inneren Leiter. Die Länge der ineinander liegenden Winkel nimmt von außen nach innen ab. Werden die Kühlkanäle des Quer- und Längsleiters - als Teilleiter eines Leiters - jeweils in Reihe geschalten, so ist daher der äußere Leiter thermisch am höchsten beansprucht. Durch die Verbindung des Kühlkanals des Quer- oder Längsleiters des äußeren Leiters mit dem Kühlkanal des Längs- oder Querleiters des inneren Leiters wird diese Beanspruchung verringert. In analoger Fortsetzung kann der nicht mit einem äußeren Teilleiter verbundene Teilleiter des innen liegenden Leiters gegebenenfalls - bei insgesamt mindestens drei zueinander versetzt angeordneten Leitern mit jeweils einem Quer- und einem Längsleiter - mit einem Teilleiter eines noch weiter innen liegenden Leiters verbunden sein. Es sind somit jeweils zwei Teilleiter unterschiedlicher Leiter verbunden, wobei lediglich ein Teilleiter des äußersten Leiters und ein Teilleiter des innersten Leiters separate Kühlkanäle aufweisen. Hierbei ist die separate Kühlung des äußersten Teilleiters aufgrund dessen im Vergleich zu anderen Teilleitern großer Länge zur Begrenzung der thermischen Beanspruchung besonders günstig.

Bei mehreren in oder an einem Leiter verlaufenden Kühlkanälen ist häufig die Nutzung nur eines Kühlkanals ausreichend. In diesem Fall ist eine Verbindung zwischen Kühlkanälen verschiedener Leiter vorteilhafterweise derart ausgeführt, dass ein Verbindungskanal in linearer Verlängerung des aktiven Kühlkanals des einen Leiters lediglich bis zu einem der senkrecht dazu verlaufenden Kühlkanäle des anderen Leiters führt, während die jeweils anderen Kühlkanäle der Leiter, z.B. durch Verschlussstücke, stillgelegt sind.

Zwischen einzelnen im Wesentlichen parallel zueinander verlaufenden Leitern oder Leiterbündeln, beispielsweise einer Spule, ist eine Abstützung angeordnet, die sowohl eine mechanische Funktion erfüllt als auch die einzelnen Leiter beziehungsweise Leiterbündel isoliert voneinander beabstandet hält. Der Verbindungskanal führt durch diese Abstützung oder einen sich durch die Anordnung derartiger Abstützungselemente ergebenden Freiraum hindurch. Darüber hinaus kann durch die Abstützung hindurch auch ein weiterer Verbindungskanal zwischen einem von mehreren Kühlkanälen eines Teilleiters und einem Kühlkanal eines weiteren Teilleiters desselben Leiters vorgesehen sein.

Die hiermit erzielten Vorteile bestehen insbesondere darin, dass einerseits mehrere Kühlleiter in oder an einem Leiterquerschnitt genutzt wurden. Andererseits wird nur ein Teilstrom des in oder an einem Teilleiter strömenden Kühlfluids über einen die Lötverbindung zu einem angeschlossenen Teilleiter umgehenden relativ langen Verbindungskanal zu diesem geführt, während ein anderer Teil des Kühlfluids über einen vergleichsweise kurzen und geraden Verbindungskanal in einen Kühlkanal eines anderen Leiters strömt. Der die Lötverbindung umgehende Verbindungskanal kann, da er nur für einen Teilstrom des Kühlfluids ausgelegt ist, einen so geringen Querschnitt aufweisen, dass er innerhalb der Abstützung Platz findet und diese praktisch nicht schwächt. Da das durch diesen Umleitungskanal strömende Kühlfluid einen Teil der Kühlleistung übernimmt, kann die Strömungsgeschwindigkeit des Kühlfluids reduziert werden, so dass sich ein niedriger Leistungsbedarf für die Umwälzung des Kühlfluids ergibt. Bei gleicher Strömungsgeschwindigkeit kann daher die Leistung und somit im Falle eines Generators die Generatorleistung erhöht werden.

Für den Austritt des Kühlfluids aus einem Kühlkanal können in an sich bekannter Weise z.B. Bohrungen bzw. Auskammerungen vorgesehen sein, die durch mehrere in einer Spule eines Generatorläufers radial übereinander liegende Leiter und Kühlkanäle hindurch geführt sind. Um eine gezielte Verteilung der verschiedenen Kühl-fluidströme zu erreichen, kann - wie aus der DE 195 43 392 C1 bekannt - in einem Kühlkanal ein Kühlkanaleinsatz angeordnet werden. Damit kann festgelegt werden, welcher Kühlfluidstrom auf welchem Weg aus dem Leiter entweicht.

Die mit der Erfindung erzielten Vorteile bestehen insbesondere darin, dass durch die strömungsgünstige Verbindung zwischen Kühlkanälen verschiedener Leiter eine gleichmäßige Kühlung bei geringen Druckverlusten erreicht wird. Dadurch wird die zur Umwälzung des Kühlfluids erforderliche Leistung reduziert und die mögliche Stromstärke in den Leitern erhöht, so dass insgesamt eine günstigere energetische Gesamtbilanz des Generators erreicht wird.

Nachfolgend werden Ausführungsbeispiele der Erfindung anhand einer Zeichnung näher erläutert. Darin zeigen:
- FIG 1: ausschnittsweise eine perspektivische Darstellung eines Generatorläufers mit innen gekühlten Leitern,
- FIG 2: ausschnittsweise einen Querschnitt mehrerer innen gekühlter Leiter,
- FIG 3: ausschnittsweise einen Querschnitt mehrerer innen gekühlter Leiter mit zusätzlichen Überleitungskanälen,
- FIG 4a-4c: ausschnittsweise im Querschnitt, in Seitenansicht bzw. in Draufsicht Ausströmöffnungen in Läufermitte.

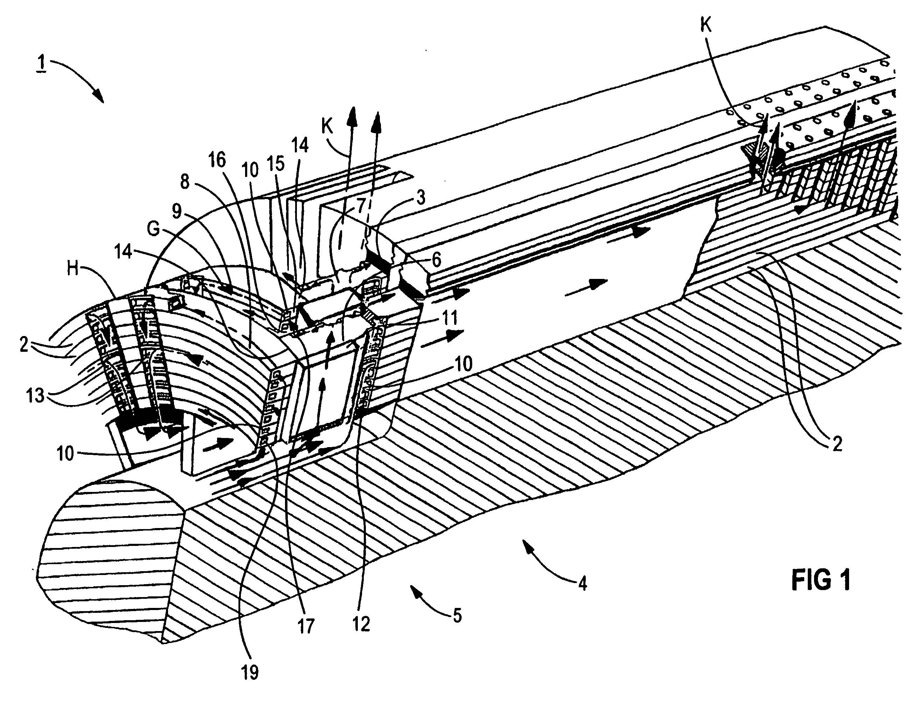

FIG 1 zeigt ausschnittsweise einen durch ein Kühlfluid K gekühlten Generatorläufer 1 mit Leitern 2,3, die. im Bereich eines Ballens 4 axial verlaufen und im Bereich eines Wickelkopfes 5 Längsleiter 6,7 mit quer daran angeschlossenen, tangential verlaufenden Querleitern 8,9 umfassen. Mehrere Leiter 2,3 sind jeweils radial übereinander angeordnet und bilden Spulen G bzw. H. Die beispielhaft ausschnittsweise dargestellten Spulen G,H sind die äußersten der auf dem Generatorläufer 1 angeordneten Spulen, die - von innen nach außen - mit A bis H bezeichnet sind, wobei die Länge der Spulen von A nach H zunimmt.

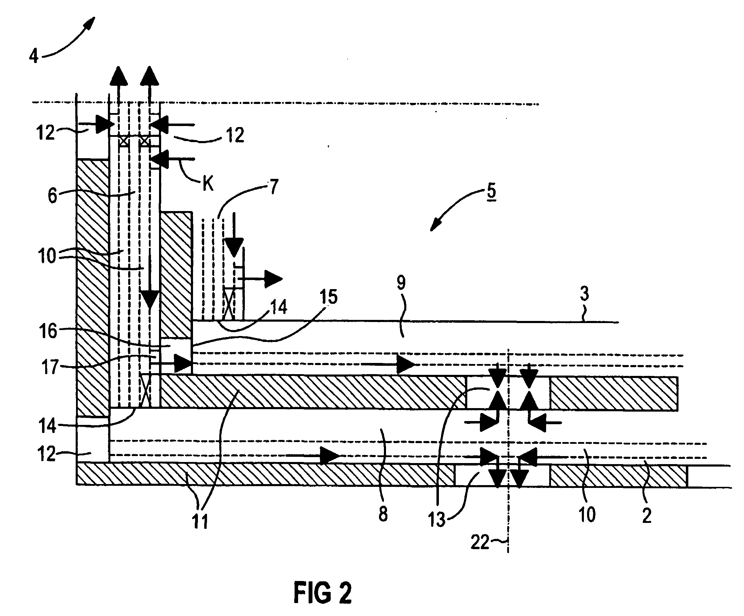

In FIG 2 ist ausschnittsweise der Wickelkopf 5 mit den Längsleitern 6,7 und den Querleitern 8,9 dargestellt. Hierbei sind, abweichend von FIG 1, die Längsleiter 6,7 links an den Querleitern 8,9 angeordnet. Die einzelnen Leiterabschnitte 6 bis 9 umfassen jeweils zwei Kühlkanäle 10. Zwischen den Leitern 2,3 sowie neben dem Leiter 3 sind nur teilweise dargestellte Abstützungen 11 vorhanden, die von Gaseintritten 12 und Gasaustritten 13 unterbrochen sind. Das Kühlfluid K kann an den Gaseintritten 12 und an den Gasaustritten 13 zumindest teilweise senkrecht zur dargestellten Ebene strömen. Die Leiter 2,3 sind mit Eckenlötungen 14 verbunden. An der Stirnseite 15 des Querleiters 9 ist die Abstützung 11 unterbrochen, wobei ein Verbindungskanal 16 zu einem Kühlkanal 10 des Längsleiters 6 führt. Einen Teil des Verbindungskanals 16 bildet hierbei eine Bohrung 17 im Längsleiter 6. Jeweils ein Kühlkanal 10 im Längsleiter 6 des Leiters 2 und im Querleiter 9 des Leiters 3 sind damit in Reihe geschalten.

In analoger Weise ist der Längsleiter 7 des Leiters 3 mit einem nicht dargestellten Querleiter eines weiter innen liegenden Leiters verbunden. Jeweils ein Kühlkanal innerhalb der Leiter 2,3 ist stillgelegt. Der zum Leiter 2 gehörende, außen liegende Querleiter 8 weist einen Kühlkanal 10 mit gesondertem Gaseintritt 12 und Gasaustritt 13 auf.

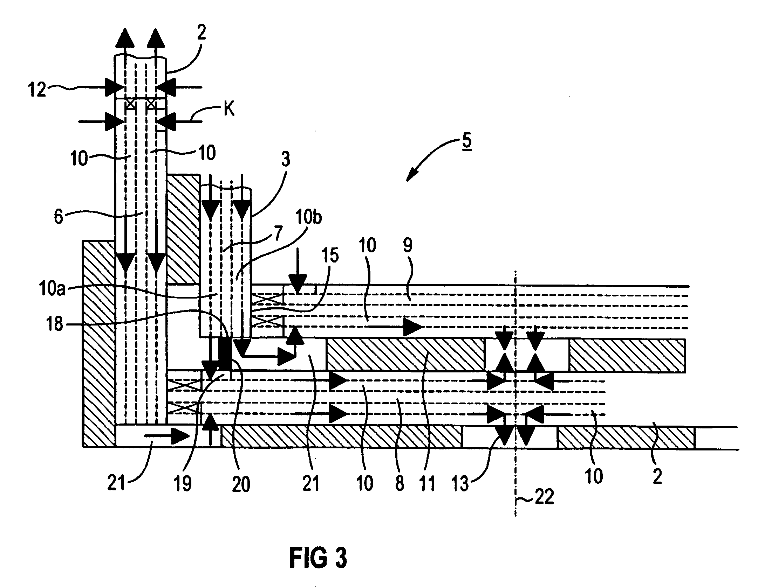

In der in FIG 3 dargestellten Ausführungsform sind jeweils zwei Kühlkanäle 10 eines Leiters 2,3 aktiv. Die Stirnseite 15 des Querleiters 9 ist mit der Wandung des Längsleiters 7 durch Lötung verbunden. An der Stirnseite 18 des Längsleiters 7 ist die Abstützung 11 unterbrochen. Das aus dem Längsleiter 7 ausströmende Kühlfluid K kann auf zwei Wegen in die Querleiter 8,9 strömen. Zum einen kann Kühlfluid K über den Kühlkanal 10a aus der Stirnseite 18 des Längsleiters 7 ausströmen und in einen Kühlkanal 10 des gegenüberliegenden Querleiters 8 über eine entsprechende Öffnung 19 einströmen. Zum anderen wird Kühlfluid K vom Kühlkanal 10b innerhalb des Längsleiters 7 über Aussparungen in der Abstützung 11, die einen Überleitungskanal 21 bilden, in einen Kühlkanal 10 des Querleiters 9 geleitet. Zur vollständigen Trennung der durch die Kühlkanäle 10a und 10b fließenden Kühlmittelströme kann eine Zwischenwand 20 vorgesehen werden.

Die in Fig. 3 dargestellte Ausführungsform hat den Vorteil, dass jeweils zwei Kühlkanäle 10 zumindest in Abschnitten der Leiter 2,3 genutzt werden können. Gleichzeitig muss bei der Leitung des Kühlfluids K von einem Längsleiter 6,7 in einen oder mehrere Querleiter 8,9 nur ein einziger Teilstrom des Kühlfluids K mehrfach umgelenkt werden. Eine Ausnahme stellt das von den Kühlkanälen 10 des Längsleiters 6 in einen Kühlkanal 10 des Querleiters 8 geleitete Kühlfluid dar. Hier ist eine Überleitung von aus dem Längsleiter 6 ausströmendem Kühlfluid K mit einer einzigen 90°-Umlenkung in einen Kühlkanal 10 des Querleiters 8 nicht möglich. Da es sich hierbei jedoch um Kühlkanäle 10 innerhalb des äußersten Leiters 2 handelt, sind im Vergleich zu einem weiter innen liegenden Leiter 3 günstige Einbauverhältnisse für die strömungsgünstige Gestaltung eines Überleitungskanals 21 gegeben.

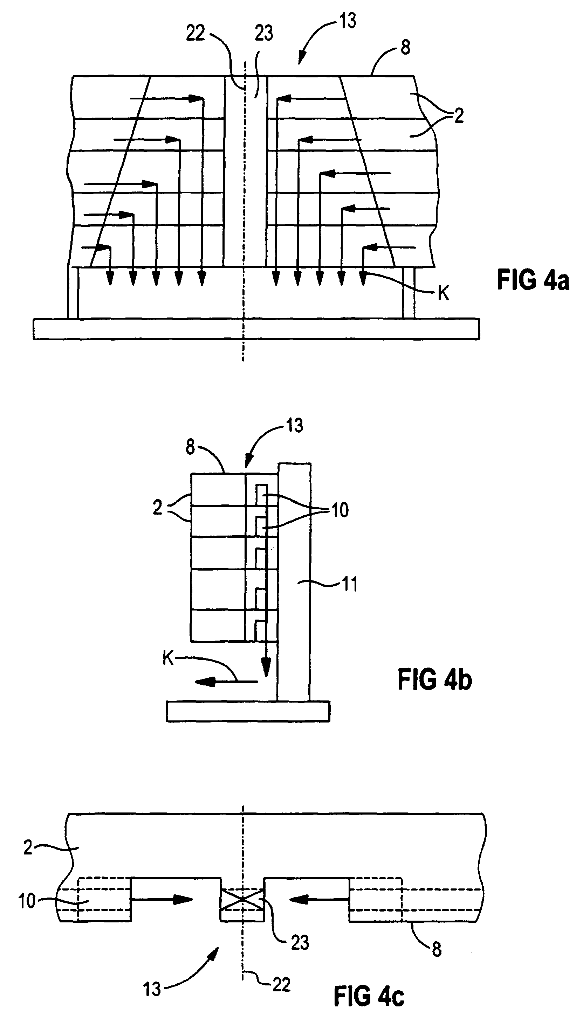

Die FIG 4a bis 4c zeigen in verschiedenen Schnitten einen Gasaustritt 13 im Wickelkopf 5. Der Gasaustritt 13 ist an der geometrischen Achse 22 des Generatorläufers 1 angeordnet und hat im Querschnitt die in FIG 4a sichtbare Trapezform. Die innen gekühlten Leiter 2 verlaufen im Bereich des Gasaustritts 13 quer zur geometrischen Achse 22. Das Kühlfluid K strömt aus den Kühlkanälen 10 auf beiden Seiten der geometrischen Achse 22 auf diese zu und wird im Gasaustritt 13 um 90° umgelenkt. Mittig im Gasaustritt 13 ist je Leiter 2 ein Paßstück 23 angeordnet, das die von beiden Seiten der geometrischen Achse 22 auf den Gasaustritt 13 zuströmenden Kühl-fluidströme trennt. Die übereinanderliegenden Kühlkanäle 10 sind im Bereich des Gasaustritts 13 derart unterschiedlich weit geöffnet, dass der Strömungsquerschnitt umso größer ist, je mehr Kühlfluid K aus verschiedenen Kühlkanälen 10 in diesem Querschnitt fließt.

## Patentansprüche

1. Anordnung innen gekühlter elektrischer Leiter (2,3) mit jeweils einem Längsleiter (6,7) und einem damit verbundenen Querleiter (8,9), die derart ineinanderliegend und zueinander beabstandet angeordnet sind, dass die Längsleiter (6,7) und die Querleiter (8,9) jeweils zumindest annähernd parallel verlaufen, wobei ein Kühlkanal (10) eines Längsleiters (6,7) eines ersten Leiters (2,3) mit einem Kühlkanal (10) eines Querleiters (8,9) eines benachbarten zweiten Leiters (2,3) verbunden ist.

2. Anordnung nach Anspruch 1, **gekennzeichnet durch** einen Verbindungskanal (16), der an der Stirnseite (18) des Längsleiters (6,7) einen Kühlkanal (10) geradlinig verlängert und quer in den Kühlkanal (10) des Querleiters (8,9) mündet.

3. Anordnung nach Anspruch 1, **gekennzeichnet durch** einen Verbindungskanal (16), der an der Stirnseite (15) des Querleiters (8,9) einen Kühlkanal (10) geradlinig verlängert und quer in den Kühlkanal (10) des Längsleiters (6,7) mündet.

4. Anordnung nach einem der Ansprüche 1 bis 3, **dadurch gekennzeichnet, dass** im Längsleiter (6,7) mehrere parallele Kühlkanäle (10a, 10b) verlaufen.

5. Anordnung nach Anspruch 4, **dadurch gekenn-zeichnet, dass** einer der parallelen Kühlkanäle (10a, 10b) mit einem Kühlkanal (10) des Querleiters (8,9) desselben Leiters (2,3) und ein anderer der parallelen Kühlkanäle (10a, 10b) mit einem Kühlkanal (10) des Querleiters (8,9) des benachbarten Leiters (2,3) verbunden ist.

6. Anordnung nach einem der Ansprüche 1 bis 5, **da-durch gekennzeichnet, dass** im Querleiter (8,9) mehrere parallele Kühlkanäle (10a, 10b) verlaufen.

7. Anordnung nach Anspruch 6, **dadurch gekenn-zeichnet, dass** einer der parallelen Kühlkanäle (10a, 10b) mit einem Kühlkanal (10) des Längsleiters (6,7) desselben Leiters (2,3) und ein anderer der parallelen Kühlkanäle (10a, 10b) mit einem Kühlkanal (10) des Längsleiters (6,7) des benachbarten Leiters (2,3) verbunden ist.

8. Generatorläufer mit einer Anordnung innen gekühlter elektrischer Leiter (2,3) nach einem der Ansprüche 1 bis 7.

## Claims

1. Arrangement of internally cooled electrical conductors (2, 3) with in each case a longitudinal conductor (6, 7) and a transverse conductor (8, 9) connected to it, which are arranged lying one inside the other at a distance apart in such a way that the longitudinal conductors (6, 7) and the transverse conductors (8, 9) respectively run at least approximately parallel to one another, a cooling duct (10) of a longitudinal conductor (6, 7) of a first conductor (2, 3) being connected to a cooling duct (10) of a transverse conductor (8, 9) of an adjacent second conductor (2, 3).

2. Arrangement according to Claim 1, **characterized by** a connecting duct (16), which on the end face (18) of the longitudinal conductor (6, 7) extends a cooling duct (10) in a straight line and opens out transversely into the cooling duct (10) of the transverse conductor (8, 9).

3. Arrangement according to Claim 1, **characterized by** a connecting duct (16), which on the end face (15) of the transverse conductor (8, 9) extends a cooling duct (10) in a straight line and opens out transversely into the cooling duct (10) of the longitudinal conductor (6, 7).

4. Arrangement according to one of Claims 1 to 3, **characterized in that** a number of parallel cooling ducts (10a, 10b) run in the longitudinal conductor (6, 7).

5. Arrangement according to Claim 4, **characterized in that** one of the parallel cooling ducts (10a, 10b) is connected to a cooling duct (10) of the transverse conductor (8, 9) of the same conductor (2, 3) and another of the parallel cooling ducts (10a, 10b) is connected to a cooling duct (10) of the transverse conductor (8, 9) of the adjacent conductor (2, 3).

6. Arrangement according to one of Claims 1 to 5, **characterized in that** a number of parallel cooling ducts (10a, 10b) run in the transverse conductor (8, 9).

7. Arrangement according to Claim 6, **characterized in that** one of the parallel cooling ducts (10a, 10b) is connected to a cooling duct (10) of the longitudinal conductor (6, 7) of the same conductor (2, 3) and another of the parallel cooling ducts (10a, 10b) is connected to a cooling duct (10) of the longitudinal conductor (6, 7) of the adjacent conductor (2, 3).

8. Generator rotor with an arrangement of internally cooled electrical conductors (2, 3) according to one of Claims 1 to 7.

## Revendications

1. Dispositif de conducteurs électriques (2, 3) à refroidissement interne et comprenant chacun un conducteur longitudinal (6, 7) et un conducteur transversal (8, 9) relié à celui-ci, qui sont disposés de telle sorte les uns dans les autres et à une certaine distance les uns des autres que les conducteurs longitudinaux (6, 7) et les conducteurs transversaux (8, 9) s'étendent à chaque fois au moins approximativement parallèlement les uns aux autres, un canal de refroidissement (10) d'un conducteur longitudinal (6, 7) d'un premier conducteur (2, 3) étant relié à un canal de refroidissement (10) d'un conducteur transversal (8, 9) d'un deuxième conducteur (2, 3) voisin.

2. Dispositif selon la revendication 1, **caractérisé par** un canal de liaison (16) qui prolonge tout droit un canal de refroidissement (10) sur le côté frontal (18) du conducteur longitudinal (6, 7) et qui débouche transversalement dans le canal de refroidissement (10) du conducteur transversal (8, 9).

3. Dispositif selon la revendication 1, **caractérisé par** un canal de liaison (16) qui prolonge tout droit un canal de refroidissement (10) sur le côté frontal (15) du conducteur transversal (8, 9) et qui débouche transversalement dans le canal de refroidissement (10) du conducteur longitudinal (6, 7).

4. Dispositif selon l'une des revendications 1 à 3, **caractérisé par le fait que** plusieurs canaux de refroidissement (10a, 10b) parallèles s'étendent dans le conducteur longitudinal (6, 7).

5. Dispositif selon la revendication 4, **caractérisé par le fait que** l'un des canaux de refroidissement parallèles (10a, 10b) est relié à un canal de refroidissement (10) du conducteur transversal (8, 9) du même conducteur (2, 3) et qu'un autre des canaux de refroidissement parallèles (10a, 10b) est relié à un canal de refroidissement (10) du conducteur transversal (8, 9) du conducteur voisin (2, 3).

6. Dispositif selon l'une des revendications 1 à 5, **caractérisé par le fait que** plusieurs canaux de refroidissement (10a, 10b) parallèles s'étendent dans le conducteur transversal (8, 9).

7. Dispositif selon la revendication 6, **caractérisé par le fait que** l'un des canaux de refroidissement parallèles (10a, 10b) est relié à un canal de refroidissement (10) du conducteur longitudinal (6, 7) du même conducteur (2, 3) et qu'un autre des canaux de refroidissement parallèles (10a, 10b) est relié à un canal de refroidissement (10) du conducteur longitudinal (6, 7) du conducteur voisin (2, 3).

8. Rotor de générateur comportant un dispositif de conducteurs électriques (2, 3) à refroidissement interne selon l'une des revendications 1 à 7.
